# FASCICULE DE BREVET EUROPEEN

(11) **EP 3 159 749 B1**
(45) Date de publication et mention de la délivrance du brevet: **21.11.2018**
(21) Numéro de dépôt: 16190767.0
(22) Date de dépôt: 27.09.2016
(51) Int. Cl.: G04B 17/06, G04B 17/20, F16F 1/04, F16F 1/10

(54) **SPIRAL À ENCOMBREMENT RÉDUIT À SECTION VARIABLE**
SPIRALFEDER MIT REDUZIERTEM PLATZBEDARF UND VARIABLEM QUERSCHNITT
COMPACT HAIRSPRING WITH VARIABLE CROSS-SECTION

(30) Priorité: 22.10.2015 EP 15191115
(43) Date de publication de la demande: 26.04.2017
(73) Titulaire: ETA SA Manufacture Horlogère Suisse, 2540 Grenchen (CH)
(72) Inventeur: Helfer, Jean-Luc, 2525 Le Landeron (CH); Cosandier, Yves-Alain, 1020 Renens (CH)
(74) Mandataire: Goulette, Ludivine

(56) Documents cités:
- EP-A1- 2 151 722
- EP-A2- 2 299 336

## Description

### Domaine de l'invention

L'invention se rapporte à un spiral à encombrement réduit et, plus particulièrement, un tel spiral destiné à coopérer avec un balancier pour former un résonateur.

### Arrière-plan de l'invention

Le prix d'un spiral en silicium est sensiblement proportionnel à sa surface, à savoir plus on arrive à graver de spiraux sur une même plaquette, plus bas est le prix d'un spiral à l'unité.

Il n'est toutefois pas possible de diminuer l'encombrement au hasard car les spires d'un spiral ne doivent pas se toucher aussi bien en contraction et qu'en expansion. EP2299336 montre un spiral monobloc comportant une lame unique enroulée sur elle-même entre une spire interne et une spire externe. EP2151722 montre un spiral pour résonateur balancier-spiral, comportant n lames, n>2, coplanaires, solidaires par au moins une de leurs extrémités homologues respectives et enroulées en spirales avec un décalage angulaire apte à neutraliser les forces latérales susceptibles d'être exercées sur son axe central lorsqu'une des extrémités de chaque lame est déplacée angulairement autour dudit axe central par rapport à son autre extrémité.

### Résumé de l'invention

Le but de la présente invention est de pallier tout ou partie les inconvénients cités précédemment en proposant un spiral à encombrement réduit tout en garantissant que ses spires ne se touchent pas aussi bien en contraction qu'en expansion.

A cet effet, l'invention se rapporte à un spiral monobloc selon la revendication 1.

Avantageusement selon l'invention, on comprend que l'encombrement du spiral est réduit au maximum tout en garantissant un éloignement constant minimal entre les spires en contraction et, éventuellement, également en expansion. On peut donc chercher à minimiser la taille du spiral, sans pour autant perdre en propriétés chronométriques. Un tel spiral permet d'optimiser le nombre de spiraux qui seront gravés sur une même plaquette afin d'en réduire le coût unitaire.

Conformément à d'autres variantes avantageuses de l'invention :
- dans la première zone, le pas entre chaque spire diminue continument selon la valeur constante entre l'extrémité de la spire interne et sa jonction avec la deuxième zone ;
- dans la première zone, la section de la lame augmente continument selon la valeur constante entre l'extrémité de la spire interne et sa jonction avec la deuxième zone ;
- le spiral comporte une troisième zone, en prolongement de la deuxième zone et comprise entre le début de la pénultième spire et l'extrémité de la spire externe, dans laquelle le pas augmente continument afin que le spiral, lorsqu'il est en expansion à une valeur de 360 degrés, ait un éloignement minimal entre la deuxième spire et la spire externe pour éviter leur contact ;
- dans la troisième zone, le pas augmente continûment selon une valeur constante ;
- la troisième zone comporte une première partie dont la section augmente de manière sensiblement identique par rapport à celle de la deuxième zone et une deuxième partie, en prolongement de la première partie, dont la section augmente en se rapprochant de l'extrémité de la spire externe, l'augmentation de la section dans la deuxième partie étant plus grande que l'augmentation de section dans la première partie ;
- le spiral est à base de silicium.

De plus, l'invention se rapporte à un résonateur caractérisé en ce qu'il comporte un balancier coopérant avec un spiral selon l'une des variantes précédentes.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue de dessus en contraction d'un spiral selon l'invention ;
- la figure 2 est une vue de dessus au repos d'un spiral selon l'invention ;
- la figure 3 est une vue de dessus en expansion d'un spiral selon l'invention ;
- la figure 4 est un graphique représentant l'évolution du pas entre les spires en fonction du nombre de spire du spiral ;
- la figure 5 est un graphique représentant l'évolution de l'épaisseur des spires en fonction du nombre de spire du spiral ;
- la figure 6 est un graphique représentant l'évolution de l'éloignement entre spires en fonction du nombre de spire du spiral et du développement du spiral.

### Description détaillée des modes de réalisation préférés

L'invention se rapporte à un spiral à encombrement réduit destiné à coopérer avec un balancier pour former un résonateur du type balancier - spiral pour une pièce d'horlogerie. Bien entendu, le spiral peut comporter une virole monobloc avec l'extrémité de la spire interne et/ou une attache de pitonnage monobloc avec l'extrémité de la spire externe sans sortir du cadre de l'invention. Toutefois, pour des raisons de simplification de l'exposé, aucune virole et/ou attache n'est illustrée.

Le développement de la présente invention a été initié pour fabriquer un maximum de spiraux sur une même plaquette à base de silicium tout en garantissant que les spires de chaque spiral ne se touchent pas aussi bien en contraction qu'en expansion. Toutefois, on comprend que le spiral ne saurait se limiter à un matériau à base de silicium. De manière non limitative, on comprend qu'une même logique est applicable à un spiral formé à partir d'un procédé LIGA, c'est-à-dire à base d'un matériau électriquement conducteur.

Les termes à base de silicium signifient un matériau comportant du silicium monocristallin, du silicium monocristallin dopé, du silicium polycristallin, du silicium polycristallin dopé, du silicium poreux, de l'oxyde de silicium, du quartz, de la silice, du nitrure de silicium ou du carbure de silicium. Bien entendu, quand le matériau à base de silicium est sous phase cristalline, n'importe quelle orientation cristalline peut être utilisée.

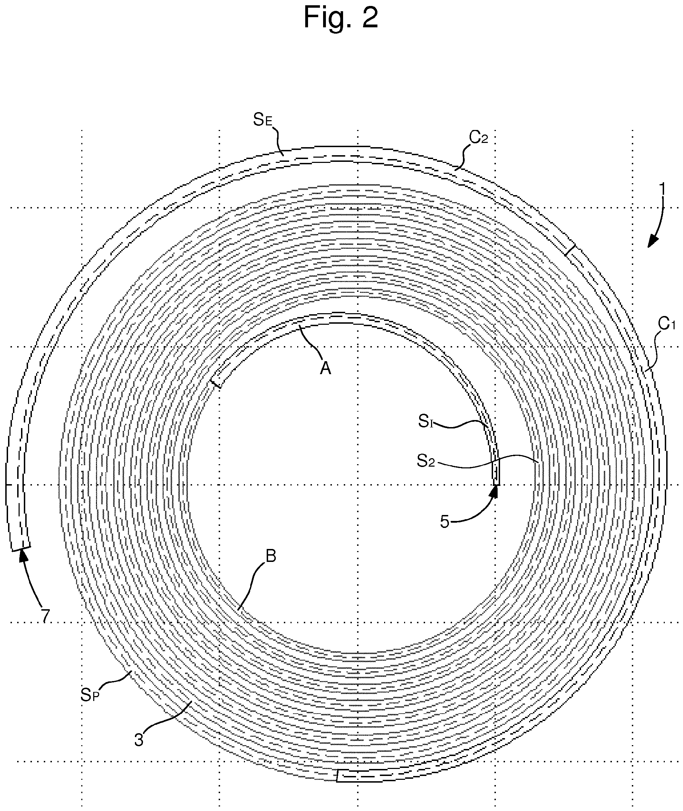

Comme illustré à la figure 2, l'invention se rapporte ainsi à un spiral 1 monobloc comportant une lame 3 unique enroulée sur elle-même entre une spire interne S_{I} et une spire externe S_{E}. Selon l'invention, la lame 3 du spiral 1, dans sa position de repos de la figure 2, comprend entre l'extrémité 5 de la spire interne S_{I} et le début de la deuxième spire S₂, une première zone A dans laquelle le pas entre la spire interne S_{I} et la deuxième spire S₂ diminue.

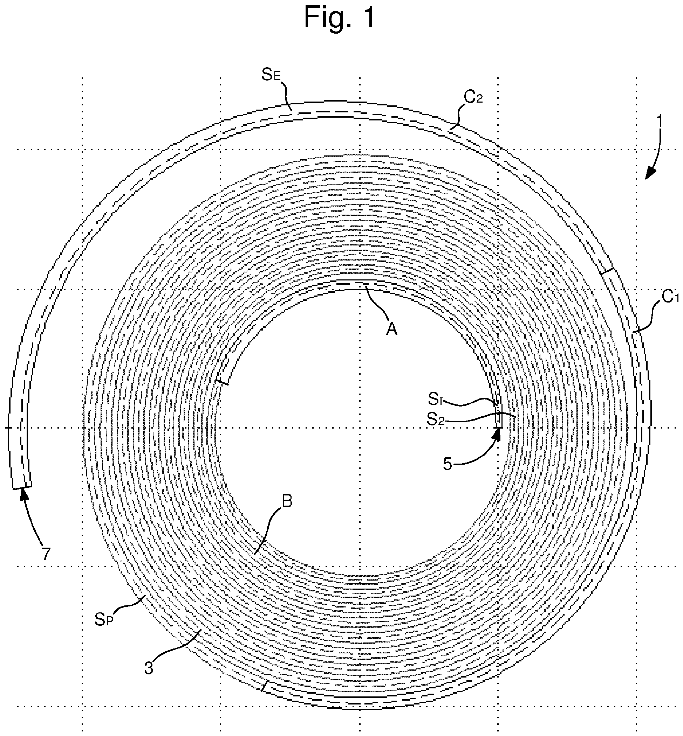

De manière avantageuse, le spiral 1 comporte, en prolongement de la première zone A, une deuxième zone B, dans laquelle le pas entre chaque spire et la section de la lame 3 augmentent continûment afin que le spiral 1, lorsqu'il est en contraction, c'est-à-dire lorsque l'extrémité 5 de la spire interne S_{I} a effectué une rotation de sensiblement à -360 degrés par rapport au centre du spiral 1, comme visible à la figure 1, ait un éloignement sensiblement constant entre chaque spire de la deuxième spire S₂ à la pénultième spire S_{P}.

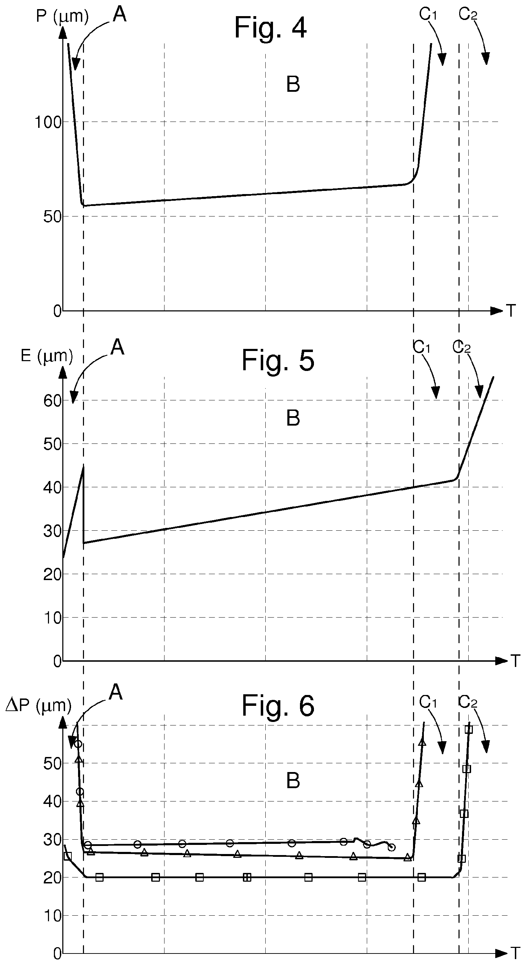

De manière préférée, comme illustré à la figure 4, le pas entre chaque spire augmente continûment selon une valeur constante dans la deuxième zone B. De plus, comme illustré à la figure 5, préférentiellement selon l'invention, la section de la lame 3 augmente continûment selon une valeur constante dans la deuxième zone B. Ainsi, à titre d'exemple, la section peut comporter une épaisseur variable comprise entre 10 et 75 *µ*m et une hauteur constante comprise entre 50 *µ*m et 250 *µ*m.

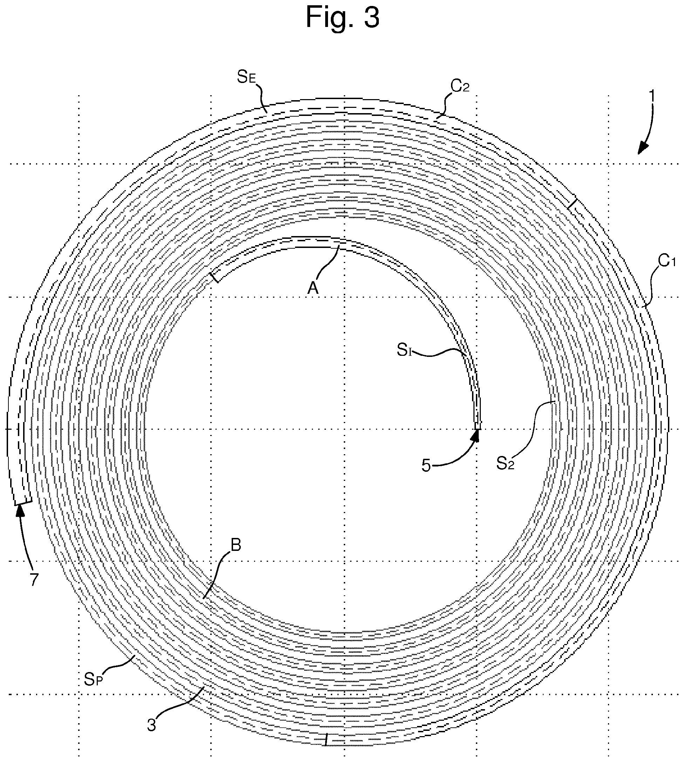

Selon une caractéristique optionnelle supplémentaire, le spiral comporte, avantageusement selon l'invention, une troisième zone C, en prolongement de la deuxième zone B et comprise entre le début de la pénultième spire S_{P} et l'extrémité 7 de la spire externe S_{E}, dans laquelle le pas, entre la pénultième spire S_{P} et la spire externe S_{E}, augmente continûment afin que le spiral 1, lorsqu'il est en expansion, c'est-à-dire lorsque l'extrémité 5 de la spire interne S_{I} a effectué une rotation de sensiblement à +360 degrés par rapport au centre du spiral 1, comme visible à la figure 3, ait un éloignement minimal entre les dernières spires pour éviter le contact notamment entre la pénultième spire S_{P} et la spire externe S_{E}.

De manière préférée, comme illustré à la figure 4, le pas entre chaque spire augmente continûment selon une deuxième valeur constante dans la troisième zone C. Comme visible à la figure 4, la deuxième valeur constante est préférentiellement supérieure à la première valeur constante de la deuxième zone B.

De plus comme illustré à la figure 5, préférentiellement selon l'invention, la troisième zone C comporte une première partie C₁ dont la section augmente de manière sensiblement identique par rapport à celle de la deuxième zone B et une deuxième partie C₂, en prolongement de la première partie C₁, dont la section augmente en se rapprochant de l'extrémité 7 de la spire externe S_{E}, l'augmentation de la section dans la deuxième partie C₂ étant plus grande que l'augmentation de section dans la première partie C₁. Ainsi, à titre d'exemple, la section peut comporter une épaisseur variable comprise entre 25 et 100 *µ*m et une hauteur constante comprise entre 50 *µ*m et 250 *µ*m.

Un premier graphique représentant l'évolution du pas P entre les spires en fonction du nombre de spire du spiral est illustré à la figure 4. On peut voir que, dans la première zone A du spiral 1, le pas diminue de manière sensiblement constante jusqu'au début de la deuxième zone B. A la figure 4, on peut voir que la deuxième zone B comporte une augmentation constante du pas jusqu'à la troisième zone C. Cette dernière C comporte une augmentation constante du pas jusqu'à l'extrémité 7 de la spire externe S_{E}. Comme visible à la figure 4, l'augmentation constante du pas de la troisième zone C est beaucoup plus prononcée que celle de la zone B.

De manière complémentaire, un deuxième graphique représentant l'évolution de l'épaisseur E des spires en fonction du nombre de spire du spiral est illustré à la figure 5. On peut voir que, dans la première zone A du spiral 1, l'épaisseur augmente jusqu'au début de la deuxième zone B où elle redescend à valeur proche de la section de début de la première zone A. A la figure 5, on peut voir que la deuxième zone B comporte une augmentation constante de la section jusqu'à la deuxième partie C₂ de la troisième zone C. La deuxième partie C₂ comporte une augmentation constante du pas jusqu'à l'extrémité 7 de la spire externe S_{E}. Comme visible à la figure 5, l'augmentation constante de la section de la deuxième partie C₂ est beaucoup plus prononcée que celle de la zone B.

Enfin, un graphique représentant l'évolution ΔP de l'éloignement entre spires en fonction du nombre de spire du spiral est illustré à la figure 6. Plus précisément, l'éloignement des spires est illustré pour le spiral dans son état en contraction de la figure 1 (courbe annotée en carré □), dans son état au repos de la figure 2 (courbe annotée en triangle Δ) et, dans son état en expansion de la figure 3 (courbe annotée en cercle ○).

Par conséquent, en état d'expansion annoté en cercle (○), on peut voir que, dans la première zone A du spiral 1, l'éloignement entre les spires diminue jusqu'au début de la deuxième zone B. On remarque, ensuite, que les deuxième et troisième zones B et C comporte un éloignement ΔP entre les spires qui est sensiblement constant jusqu'à l'extrémité 7 du spiral 1.

Dans son état au repos à la courbe annotée en triangle (Δ), on peut voir que, dans la première zone A du spiral 1, l'éloignement ΔP entre les spires diminue jusqu'au début de la troisième zone C. On peut notamment voir une diminution sensiblement continue beaucoup plus prononcée dans la zone A puis plus mesurée et selon une pente sensiblement constante dans la zone B. On remarque, ensuite, que la troisième zone C comporte un éloignement ΔP entre les spires qui augmente continûment jusqu'à l'extrémité 7 du spiral 1.

Enfin, en état de contraction annoté en carré (□), on peut voir que, dans la première zone A, l'éloignement ΔP entre les spires diminue jusqu'au début de la deuxième zone B. On remarque ensuite, dans la deuxième zone B du spiral 1, que l'éloignement ΔP entre les spires est avantageusement constant et égale à une valeur minimale. Pour finir, la troisième zone C comporte une augmentation continue de l'éloignement entre les spires en se rapprochant de l'extrémité 7 de la spire externe S_{E}.

A la figure 6, on remarque que les valeurs minimales des courbes en cercle (○) et en carré (□) ne sont pas identiques. Toutefois, elles pourraient être rendues géométriquement identiques.

De même, les valeurs décrites dans les figures 4 à 6 sont utilisés uniquement à titre d'exemple. Ainsi, suivant les configurations du spiral et/ou du résonateur auquel il appartient, la valeur minimale choisie pourrait être différente des 20 *µ*m choisis comme exemple à la figure 6. On comprend donc que chaque valeur minimale des courbes en cercle (O) et en carré (□) pourrait être choisie inférieure ou supérieure à 20 *µ*m.

Avantageusement selon l'invention, on comprend toutefois que ces caractéristiques particulières du spiral 1 autorisent un encombrement du spiral au repos qui est réduit au maximum tout en garantissant un éloignement constant minimal entre les spires en contraction et, éventuellement, également en expansion. Typiquement, le spiral 1 au repos comporte 8,5 spires selon un rayon maximal d'environ 1,3 millimètre, c'est-à-dire la distance entre le centre géométrique du spiral 1 et l'extrémité 7 de la spire externe S_{E}. A titre d'exhaustivité, il est apparu dans l'étude que la distance, entre le centre géométrique du spiral 1 et l'extrémité 5 de la spire interne S_{E}, était d'environ 0,5 millimètre. On peut donc minimiser la taille du spiral sans pour autant perdre en propriétés chronométriques. Un tel spiral selon l'invention permet d'optimiser le nombre de spiraux qui seront gravés sur une même plaquette afin d'en réduire le coût unitaire.

Bien entendu, la présente invention ne se limite pas à l'exemple illustré mais est susceptible de diverses variantes et modifications qui apparaîtront à l'homme de l'art. En particulier, la géométrie, c'est-à-dire les variations de pas, de section comme par exemple l'épaisseur et le nombre de spires, peut varier suivant les applications prévues.

A titre d'exemple, il pourrait être envisagé de manière additionnelle de réduire le nombre de spires pour encore d'avantage diminuer l'encombrement du spiral.

Il est également clair que l'angle de 360 degrés en contraction ou en expansion pourrait être plus faible sans sortir du cadre de l'invention. En effet, cet angle a été choisi car mécaniquement cet angle ne peut théoriquement pas être dépassé. Toutefois, l'importance n'est pas pour quel angle l'éloignement est minimal mais plutôt d'être sûr que l'éloignement minimal ne soit jamais dépassé. On comprend donc que l'angle pourrait être choisi volontairement plus bas car, suivant la configuration du mouvement, il est clair que cet angle ne sera pas dépassé en fonctionnement normal.

De plus, les valeurs en ordonnées de la figure 4, ne sont nullement limitatives. Ainsi, suivant la section de la deuxième zone B, le pas maximal de la première zone A et/ou de la troisième zone C peuvent varier. On comprend donc que seules les variations de pas sont conservées mais pas forcément selon les mêmes valeurs minimales et/ou maximales.

De manière similaire, les valeurs en ordonnées de la figure 5, ne sont nullement limitatives. Ainsi, suivant l'épaisseur de la deuxième zone B, l'épaisseur maximale de la première zone A et/ou de la troisième zone C peuvent varier. On comprend donc que seules les variations d'épaisseur sont conservées mais pas forcément selon les mêmes valeurs minimales et/ou maximales.

Enfin, même si les calculs ont été effectués à partir de la variation de l'épaisseur, il est bien évident que la variation doit être comprise comme une variation de section, c'est-à-dire de la hauteur et/ou de l'épaisseur de la lame du spiral.

## Revendications

1. Spiral (1) monobloc comportant une lame (3) unique enroulée sur elle-même entre une spire interne (S_{I}) et une spire externe (S_{E}), la lame (3) au repos comprenant entre l'extrémité de la spire interne (S_{I}) et la deuxième spire (S₂), une première zone (A) dans laquelle le pas diminue continument selon une valeur constante et la section augmente continûment selon une valeur constante, une deuxième zone (B), en prolongement de la première zone (A), dans laquelle le pas entre chaque spire augmente continument selon une valeur constante et la section de la lame (3) commence à une valeur plus petite que la section de fin de la zone A puis augmente continument selon une valeur constante afin que le spiral (1), lorsqu'il est en contraction à une valeur de 360 degrés, ait un éloignement constant entre chaque spire de la deuxième spire (S₂) à la pénultième spire (S_{P}).

2. Spiral (1) selon la revendication précédente, **caractérisé en ce que**, dans la première zone (A), le pas entre chaque spire diminue continument selon la valeur constante entre l'extrémité (5) de la spire interne (S_{I}) et sa jonction avec la deuxième zone (B).

3. Spiral (1) selon l'une des revendications précédentes, **caractérisé en ce que**, dans la première zone (A), la section de la lame (3) augmente continument selon la valeur constante entre l'extrémité (5) de la spire interne (S_{I}) et sa jonction avec la deuxième zone (B).

4. Spiral (1) selon l'une des revendications précédentes, **caractérisé en ce que** le spiral (1) comporte une troisième zone (C), en prolongement de la deuxième zone (B) et comprise entre le début de la pénultième spire (S_{P}) et l'extrémité (7) de la spire externe (S_{E}), dans laquelle le pas augmente continument afin que le spiral (1), lorsqu'il est en expansion à une valeur de 360 degrés, ait un éloignement minimal entre la deuxième spire (S₂) et la spire externe (S_{E}) pour éviter leur contact.

5. Spiral (1) selon la revendication précédente, **caractérisé en ce que**, dans la troisième zone (C), le pas augmente continument selon une valeur constante.

6. Spiral (1) selon la revendication précédente, **caractérisé en ce que** la troisième zone (C) comporte une première partie (C₁) dont la section augmente de manière sensiblement identique par rapport à celle de la deuxième zone (B) et une deuxième partie (C₂), en prolongement de la première partie (C₁), dont la section augmente en se rapprochant de l'extrémité (7) de la spire externe (S_{E}), l'augmentation de la section dans la deuxième partie (C₂) étant plus grande que l'augmentation de section dans la première partie (C₁).

7. Spiral (1) selon l'une des revendications précédentes, **caractérisé en ce que** le spiral (1) est à base de silicium.

8. Résonateur **caractérisé en ce que** le résonateur comporte un balancier coopérant avec un spiral (1) selon l'une des revendications précédentes.

## Patentansprüche

1. Einteilige Spiralfeder (1), umfassend ein einzelnes Blatt (3), das zwischen einer inneren Windung (S_{I}) und einer äußeren Windung (S_{E}) auf sich selbst gewickelt ist, wobei das Blatt (3) im Ruhezustand zwischen dem Ende der inneren Windung (S_{I}) und der zweiten Windung (S₂) eine erste Zone (A), in der die Steigung mit einem konstanten Wert kontinuierlich abnimmt und der Querschnitt mit einem konstanten Wert kontinuierlich zunimmt, und eine zweite Zone (B) in Verlängerung der ersten Zone (A) umfasst, in der die Steigung zwischen jeder Windung mit einem konstanten Wert kontinuierlich zunimmt und der Querschnitt des Blatts (3) mit einem niedrigeren Wert als der Querschnitt des Endes der Zone A beginnt und dann mit einem konstanten Wert kontinuierlich zunimmt, damit die Spiralfeder (1), wenn sie auf einen Wert von 360 Grad kontrahiert ist, von der zweiten Windung (S₂) zu der vorletzten Windung (S_{P}) einen konstanten Abstand zwischen jeder Windung besitzt.

2. Spiralfeder (1) nach dem vorhergehenden Anspruch, **dadurch gekennzeichnet, dass** in der ersten Zone (A) die Steigung zwischen jeder Windung kontinuierlich abnimmt mit dem konstanten Wert zwischen dem Ende (5) der inneren Windung (S_{I}) und ihrem Übergang zu der zweiten Zone (B).

3. Spiralfeder (1) nach einem der vorhergehenden Ansprüche, **dadurch gekennzeichnet, dass** in der ersten Zone (A) der Querschnitt des Blatts (3) kontinuierlich zunimmt mit dem konstanten Wert zwischen dem Ende (5) der inneren Windung (S_{I}) und ihrem Übergang zu der zweiten Zone (B).

4. Spiralfeder (1) nach einem der vorhergehenden Ansprüche, **dadurch gekennzeichnet, dass** die Spiralfeder (1) in der Verlängerung der zweiten Zone (B) eine dritte Zone (C) umfasst, die zwischen dem Beginn der vorletzten Windung (S_{P}) und dem Ende (7) der äußeren Windung (S_{E}) enthalten ist, in der die Steigung kontinuierlich zunimmt, damit die Spiralfeder (1) dann, wenn sie auf einen Wert von 360 Grad expandiert ist, zwischen der zweiten Windung (S₂) und der äußeren Windung (S_{E}) einen minimalen Abstand aufweist, um ihren Kontakt zu vermeiden.

5. Spiralfeder (1) nach dem vorhergehenden Anspruch, **dadurch gekennzeichnet, dass** die Steigung in der dritten Zone (C) kontinuierlich mit einem konstanten Wert zunimmt.

6. Spiralfeder (1) nach dem vorhergehenden Anspruch, **dadurch gekennzeichnet, dass** die dritte Zone (C) einen ersten Teil (C₁), dessen Querschnitt im Verhältnis zu jenem der zweiten Zone (B) auf im Wesentlichen identische Weise zunimmt, und einen zweiten Teil (C₂) in Verlängerung des ersten Teils (C₁) umfasst, dessen Querschnitt bei seiner Annäherung an das Ende (7) der äußeren Windung (S_{E}) zunimmt, wobei die Zunahme des Querschnitts in dem zweiten Teil (C₂) größer als die Zunahme des Querschnitts in dem ersten Teil (C₁) ist.

7. Spiralfeder (1) nach einem der vorhergehenden Ansprüche, **dadurch gekennzeichnet, dass** die Spiralfeder (1) auf Siliciumbasis hergestellt ist.

8. Resonator, **dadurch gekennzeichnet, dass** der Resonator eine Unruh umfasst, die mit einer Spiralfeder (1) nach einem der vorhergehenden Ansprüche zusammenwirkt.

## Claims

1. One-piece balance spring (1) comprising a single strip (3) wound on itself between an inner coil (S_{I}) and an outer coil (S_{E}), the strip (3) comprising, at rest, between the end of the inner coil (S_{I}) and the second coil (S₂), a first area (A) wherein the pitch continuously decreases by a constant value and the section continuously increases by a constant value, a second area (B), in the extension of the first area (A), wherein the pitch between each coil continuously increases by a constant value and the section of the strip (3) starts at a smaller value than the section at the end of the first area (A), then continuously increases by a constant value such that, when the angle of contraction of the balance spring (1) has a value of 360 degrees, there is a constant distance between each coil from the second coil (S₂) to the penultimate coil (S_{P}).

2. One-piece balance spring (1) according to the preceding claim, **characterized in that**, in the first area (A), the pitch between each coil continuously decreases by the constant value between the end (5) of the inner coil (S_{I}) and the junction thereof with the second area (B).

3. One-piece balance spring (1) according to any one of the preceding claims, **characterized in that**, in the first area (A), the section of the strip (3) continuously decreases by the constant value between the end (5) of the inner coil (S_{I}) and the junction thereof with the second area (B).

4. One-piece balance spring (1) according to any one of the preceding claims, **characterized in that** the balance spring (1) includes a third area (C), in the extension of the second area (B) and comprised between the start of the penultimate coil (S_{P}) and the end (7) of the outer coil (S_{E}), wherein the pitch continuously increases such that, when the angle of expansion of the balance spring (1) has a value of 360 degrees, there is a minimum distance between the second coil (S₂) and the outer coil (S_{E}) to prevent any contact there between.

5. One-piece balance spring (1) according to the preceding claim, **characterized in that**, in the third area (C), the pitch continuously increases by a constant value.

6. One-piece balance spring (1) according to the preceding claim, **characterized in that** the third area (C) includes a first portion (C₁) whose section increases in a substantially identical manner relative to that of the second area (B) and a second portion (C₂), in the extension of the first portion (C₁), whose section increases towards the end (7) of the outer coil (S_{E}), the increase in section in the second portion (C₂) being greater than the increase in section in the first portion (C₁).

7. One-piece balance spring (1) according to any one of the preceding claims, **characterized in that** the balance spring (1) is silicon-based.

8. Resonator **characterized in that** the resonator includes a balance cooperating with a one-piece balance spring (1) according to any one of the preceding claims.
